# EUROPÄISCHE PATENTSCHRIFT

(11) **EP 0 775 864 B1**
(45) Veröffentlichungstag und Bekanntmachung des Hinweises auf die Patenterteilung: **24.01.2001**
(21) Anmeldenummer: 96118170.8
(22) Anmeldetag: 13.11.1996
(51) Int. Cl.: F16L 25/00, F16L 33/26, F16L 33/28, F16L 23/024

(54) **Flammlose Anschlussverbindung für Wellrohre**
Flameless connection assembly for corrugated pipes
Assemblage de connexion sans flamme pour tubes ondulés

(30) Priorität: 24.11.1995 DE 29518603 U
(43) Veröffentlichungstag der Anmeldung: 28.05.1997
(73) Patentinhaber: BRUGG Rohrsysteme GmbH, D-31515 Wunstorf (DE)
(72) Erfinder: Bittner, Herbert, 31515 Wunstorf (DE); Schäfer, Hans-Peter, 30173 Hannover (DE)

(56) Entgegenhaltungen:
- DE-A- 4 105 782
- GB-A- 2 197 409
- US-A- 4 630 850

## Beschreibung

Die Erfindung betrifft ein schraubenlinienförmig gewelltes Metallrohr mit einer flammlosen Anschlußverbindung.

Für den Anschluß von schraubenlinienförmig gewellten Metallrohre an Glattrohre, Rohrflansche etc. sind verschiedene Techniken entwickelt worden.

So ist es beispielsweise bekannt, das Wellrohrende zu entwellen, so daß für den Anschluß ein glattes Rohrende vorliegt, welches z. B. mit einem Rohrflansch verschweißt werden kann.

Eine andere Lösung sieht vor, auf das Wellrohrende eine mit einem schraubenlinienförmigen Gewindegang versehene Buchse aufzuschrauben. Die Buchse kann mit dem Wellrohrende verlötet oder verschweißt werden, oder aber eine Abdichtung wird mit Hilfe von Dichtungswerkstoffen wie z. B. Graphit erreicht.

Die Probleme, die beim Anschluß eines schraubenlinienförmig gewellten Metallrohrs anstehen, bestehen darin, daß die Schnittkante des Wellrohrendes stets exzentrisch zur Mittelachse gelegen ist und auf der einen Seite durch einen Wellenberg, auf der gegenüberliegenden Seite durch ein Wellental und zwischen diese beiden Punkten durch die Wellenflanken verläuft. Darüberhinaus ist die Wanddicke bei gewellten Rohren in der Regel sehr dünn.

Aus der DE 33 02 450 C2 ist eine Verbindung zwischen dem Ende eines schraubenlinienförmig gewellten Metallrohres und einem Glattrohrstutzen bekannt, bei welcher auf das Wellrohrende eine Außenbuchse und der Glattrohrstutzen mittels eines an seiner Außenfläche vorgesehenen Gewindes in das Wellrohrende eingeschraubt ist, wobei der Glattrohrstutzen aus dem Wellrohr herausragt.

Die Abdichtung zwischen Glattrohrstutzen und dem Wellrohr wird dadurch erreicht, daß die lichte Weite der Außenbuchse zum Ende hin zunimmt und/oder der Durchmesser des Außengewindes zum Ende des Rohrstutzens hin abnimmt. Infolge der Konizitäten wird eine Abdichtung erreicht, die den normalen Anforderungen genügt. Für extreme Anforderung kann zwischen dem Gewinde des Rohrstutzens und dem Wellrohr ein Dichtungsmittel z. B. Hanf vorgesehen werden. Diese Anschlußverbindung hat sich bewährt, da sie an den Rohrverleger keine großen Anforderungen stellt, da die Handgriffe denen bei der Verlegung von Glattrohren im wesentlichen gleichen.

Nachteilig bei dieser Anschlußverbindung sind die hohen Kosten, die bei der Herstellung des Glattrohrstutzens sowie der Außenbuchse entstehen.

Der vorliegenden Erfindung liegt von daher die Aufgabe zugrunde, eine Anschlußverbindung anzugeben, die ohne Löten oder Schweißen auf der Montagestelle auskommt und die mit wesentlich einfacheren Mitteln eine mechanisch feste und dichte Verbindung zwischen einem schraubenlinienförmig gewellten Metallrohr und einem Flansch herstellt.

Diese Aufgabe wird durch die im Anspruch 1 erfaßten Merkmale gelöst.

Der wesentliche Vorteil der Erfindung ist darin zu sehen, daß mit einfachen Mitteln eine sog. flammlose Verbindung zwischen einem schraubenlinienförmig gewellten Rohr und einem Flansch herstellbar ist.

Die Buchse hat dabei im wesentlichen die Aufgabe, eine Abstützung für die Bördelkante beim und nach dem Bördelvorgang zu übernehmen. Auf diese Weise lassen sich leicht verformbare Werkstoffe wie z. B. Kupfer oder Aluminium rißfrei um 90° umbördeln. Tragbare Bördeleinrichtungen, die für die erfindungsgemäße Verbindung anwendbar sind, sind marktgängig. Bei dem Losflansch handelt es sich um ein Massenprodukt, welches kostengünstig erhältlich ist. Die Buchse kann als Spritzgußteil aus Kunststoff aber auch als Gußteil oder kaltgeformtes Teil aus Metall z. B. Kupfer hergestellt werden.

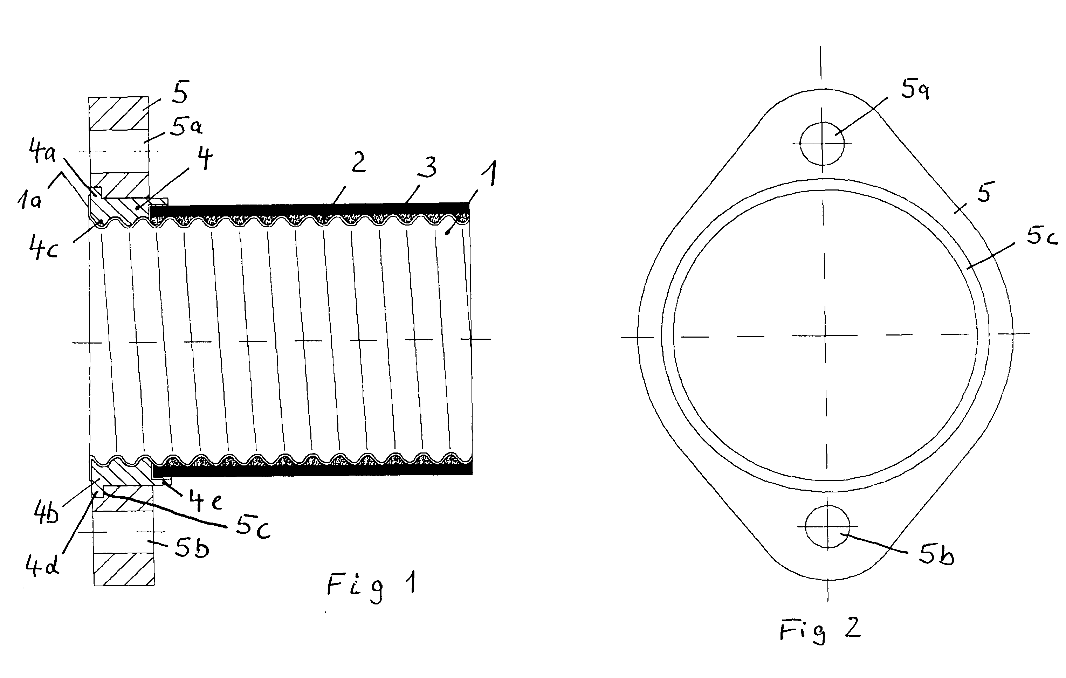

Die Erfindung ist anhand des in den Figuren 1 und 2 schematisch dargestellten Ausführungsbeispiels näher erläutert.

Mit 1 ist ein schraubenlinienförmig gewelltes Metallrohr bezeichnet, welches eine Korrosionsschutzschicht 2 sowie einen Kunststoffaußenmantel 3 aufweist. Solche Rohre werden in nahezu unendlichen Längen aus einem zu einem Rohr geformten längsnahtgeschweißten Metallband hergestellt. Das geschweißte Metallrohr wird anschließend gewellt, darauf der Korrosionsschutz 2 auf Bitumenbasis und abschließend der Außenmantel 3 aus Polyethylen durch Extrusion aufgebracht. Die so hergestellten Rohre sind äußerst flexibel und können deshalb auf übliche Kabeltrommeln aufgewickelt werden. Sie können vorkonfektioniert, d. h. mit Anschlußvorrichtungen versehen zu einem Ringbund gewickelt werden.

Für eine Anschlußverbindung wird zunächst das Ende des gewellten Metallrohres 1 von der Korrosionsschutzschicht 2 und dem Kunststoffaußenmantel 3 befreit.

Auf das Ende wird eine Buchse 4 aus Kunststoff aufgeschraubt bzw. werden zwei Halbschalen 4a und 4b auf das Ende des gewellten Metallrohres 1 aufgelegt. Die Halbschalen 4a und 4b können an ihrer Kontaktfläche mittels einer Zapfen/Bohrung-Verbindung zusammengesteckt werden.

Die Buchse 4 weist an ihrer Innenfläche eine schraubenförmige Profilierung 4c sowie eine flanschartige Erweiterung 4d auf. Mit einem Ansatz 4e übergreift sie den Kunststoffaußenmantel 3. Ein nicht dargestellter Schrumpfschlauch kann bei Bedarf den Spalt zwischen dem Ansatz 4e und dem Kunststoffaußenmantel 3 abdichten.

Auf der Buchse 4 bzw. den Halbschalen 4a und 4b sitzt mit relativ geringem Spiel ein Losflansch 5, der vorzugsweise als Ovalflansch mit zwei Bohrungen 5a und 5b für nicht dargestellte Schraubbolzen versehen ist. Der Losflansch 5 besitzt ferner eine Ausdrehung 5c, die so bemessen ist, daß die flanschartige Erweiterung 4d von ihr aufgenommen ist. Der Außendurchmesser der Buchse 4 und der Innendurchmesser des Losflansches 5 sind so aufeinander abgestimmt, daß eine leichtgängige axiale Verschiebung ohne Verkanten möglich ist.

Die Buchse 4 wird auf das gewellte Metallrohr 1 so aufgeschraubt oder aufgelegt, daß ein kurzes Ende des Rohres 1 hervorschaut. Mit einer an sich bekannten, nicht dargestellten Bördeleinrichtung wird das Wellrohrende zu einem an der Stirnfläche der Buchse 4 anliegenden Bördelflansch 1a umgeformt.

Beim Anschluß des so vorbereiteten Endes des gewellten Metallrohres an ein gleichartig vorbereitetes Ende oder eine mit Flansch versehene Armatur wird der Bördelflansch 1a gegen einen nicht dargestellten Dichtungsring gepreßt. Der Bördelflansch 1a übernimmt dabei sowohl die Funktion der Dichtung als auch der mechanischen Verbindung des gewellten Metallrohres 1 mit der anzuschließenden Armatur.

## Patentansprüche

1. Schraubenlinienförmig gewelltes Metallrohr mit einer flammlosen Anschlußverbindung, umfassend
a) eine auf dem Ende des gewellten Metallrohres (1) aufsitzende Buchse (4) mit einer der Wellform angepaßten schraubengangförmigen Profilierung (4c) an der inneren Oberfläche und einer flanschartigen Erweiterung (4d) an dem dem gewellten Metallrohrende zugekehrten Ende der Buchse (4),
b) eine gegen die Stirnseite der Buchse (4) aufgebrachte Aufbördelung (1a) des gewellten Metallrohrendes (1) und
c) einen auf der Buchse (4) aufsitzenden Losflansch (5).

2. Schraubenlinienförmig gewelltes Metallrohr nach Anspruch 1, dadurch gekennzeichnet, daß die innenliegende Kante der flanschartigen Erweiterung (4d) abgerundet ist.

3. Schraubenlinienförmig gewelltes Metallrohr nach Anspruch 1 oder 2, dadurch gekennzeichnet, daß der Innendurchmesser des Losflansches (5) nur geringfügig größer ist als der Außendurchmesser der Buchse (4), so daß er leicht und ohne Verkanten in längsaxialer Richtung bewegbar ist.

4. Schraubenlinienförmig gewelltes Metallrohr nach einem der Ansprüche 1 bis 3, dadurch gekennzeichnet, daß der Außendurchmesser der Bördelung (1a) größer ist als der größere Durchmesser der Abrundung der Buchse (4).

5. Schraubenlinienförmig gewelltes Metallrohr nach einem der Ansprüche 1 bis 4, dadurch gekennzeichnet, daß die Buchse (4) zweigeteilt ist (4a,4b).

6. Schraubenlinienförmig gewelltes Metallrohr nach Anspruch 5, dadurch gekennzeichnet, daß die Mantelfläche der Buchse (4) von der flanschartigen Erweiterung (4d) zum anderen Ende konisch verläuft, dergestalt, daß der Losflansch (5) in einer Stellung am oder nahe bei der flanschartigen Erweiterung (4d) die Halbschalen (4a,4b) zusammenpreßt.

7. Schraubenlinienförmig gewelltes Metallrohr nach einem der Ansprüche 1 bis 6, dadurch gekennzeichnet, daß die Buchse (4) bzw. die Halbschalen (4a,4b) als Spritzengußteil aus einem mechanisch festen Kunststoff wie z. B. Hartpolyethylen ausgebildet ist.

8. Schraubenlinienförmig gewelltes Metallrohr nach einem der Ansprüche 1 bis 7, dadurch gekennzeichnet, daß der Losflansch (5) an seiner dem gewellten Metallrohr (1) abgekehrten Oberfläche eine Ausdrehung (5c) besitzt, in welcher die flanschartige Erweiterung (4d) befindlich ist.

## Claims

1. A helically corrugated metal conduit with a flameless connection comprising:
a) a sleeve (4) seated on the end of the corrugated metal conduit (1) with a helical profile (4c) adapted to the corrugation on the inner surface, and a flange-like expansion (4d) on the end of the sleeve (4) facing the corrugated metal conduit,
b) a flange (1a) of the corrugated metal conduit end (1) placed against the face of the sleeve (4), and
c) a loose flange (5) that sits on the sleeve (4).

2. A helically corrugated metal conduit according to claim 1, characterized in that the inner edge of the flange-like expansion (4d) is rounded.

3. A helically corrugated metal conduit according to claims 1 or 2, characterized in that the inner diameter of the loose flange (5) is only slightly larger than the outer diameter of the sleeve (4) so that it can move easily without skewing in a lengthwise axial direction.

4. A helically corrugated metal conduit according to one of claims 1-3, characterized in that the outer diameter of the flange (1a) is larger than the larger diameter of the rounded part of the sleeve (4).

5. A helically corrugated metal conduit according to one of claims 1-4, characterized in that the sleeve (4) is in two parts (4a,4b).

6. A helically corrugated metal conduit according to claim 5, characterized in that lateral surface of the sleeve (4) is conical from the flange-like expansion (4d) to the other end so that the loose flange (5) presses together the half-shells (4a,b) at or close to the flange-like expansion (4d).

7. A helically corrugated metal conduit according to one of claims 1-6, characterized in that the sleeve (4) and the half-shells (4a,4b) are injection-molded parts made of a mechanically solid plastic such as hard polyethylene.

8. A helically corrugated metal conduit according to one of claims 1-7, characterized in that the loose flange (5) has a lip (5c) on its surface facing away from the corrugated metal conduit (1) in which is located the flange-like expansion (4d).

## Revendications

1. Un tuyau métallique ondulé en forme de filet de vis équipé d'un raccord de liaison à froid composé de
a) une douille (4) montée à l'extrémité du tuyau métallique ondulé (1) et comportant un profil à vis (4c) interne compatible avec celui du tuyau, et un épaulement (4d) en forme de bride sur l'extrémité de la douille (4) opposée à celle de l'extrémité du tuyau métallique ondulé,
b) un collet (1a) formé dans l'extrémité du tuyau métallique (1) et reposant sur la face frontale de la douille (4), et
c) une bride indépendante (5) reposant sur la douille (4).

2. Un tuyau métallique ondulé en forme de filet de vis suivant la revendication 1, et caractérisé par le fait que le bord interne de l'extension de bride (4d) est arrondi.

3. Un tuyau métallique ondulé en forme de filet de vis suivant la revendication 1 ou 2, et caractérisé par le fait que le diamètre interne de la bride indépendante (5) est faiblement supérieur au diamètre externe de la douille (4), de telle manière qu'elle puisse se déplacer facilement dans le sens axial sans coincer.

4. Un tuyau métallique ondulé en forme de filet de vis suivant une des revendications 1 à 3, et caractérisé par le fait que le diamètre externe du collet (1a) est plus grand que le diamètre le plus important du chanfrein de la douille (4).

5. Un tuyau métallique ondulé en forme de filet de vis suivant une des revendications 1 à 4, et caractérisé par le fait que la douille (4) est formée de deux parties (4a, 4b).

6. Un tuyau métallique ondulé en forme de filet de vis suivant la revendication 5, et caractérisé par le fait que la partie d'épaulement en forme de bride (4d) de l'habillage de la douille (4) est conique vers l'extrémité opposée, de telle manière que la bride indépendante (5) se trouve dans une position, sur ou à proximité de l'épaulement (4d), lui permettant de presser ensemble les demi coques (4a, 4b).

7. Un tuyau métallique ondulé en forme de filet de vis suivant une des revendications 1 à 6, et caractérisé par le fait que la douille (4) ou les demi coques (4a, 4b) soient formées par moulage par injection dans un matériau synthétique mécaniquement rigide, comme par exemple un polyéthylène dur.

8. Un tuyau métallique ondulé en forme de filet de vis suivant une des revendications 1 à 7, et caractérisé par le fait que la bride indépendante (5) possède sur sa face opposée au tuyau métallique (1) un lamage (5c) où vient reposer l'épaulement en forme de bride (4d).
